# EUROPÄISCHE PATENTSCHRIFT

(11) **EP 3 775 933 B1**
(45) Veröffentlichungstag und Bekanntmachung des Hinweises auf die Patenterteilung: **12.10.2022**
(21) Anmeldenummer: 19713768.0
(22) Anmeldetag: 25.03.2019
(51) Int. Cl.: G01P 3/489, G01D 3/08, H02J 9/06, H02J 1/10

(54) **SENSORANORDNUNG FÜR EIN FAHRZEUG**
SENSOR ASSEMBLY FOR A VEHICLE
DISPOSITIF DE DÉTECTION POUR UN VÉHICULE

(30) Priorität: 27.03.2018 DE 102018204599
(43) Veröffentlichungstag der Anmeldung: 17.02.2021
(73) Patentinhaber: Robert Bosch GmbH, 70442 Stuttgart (DE)
(72) Erfinder: WIRTH, Jens, 74232 Abstatt (DE); KOEGEL, Martin, 99438 Bad Berka (DE)
(86) Internationale Anmeldenummer: PCT/EP2019/057399
(87) Internationale Veröffentlichungsnummer: WO 2019/185523

(56) Entgegenhaltungen:
- DE-A1- 10 041 989
- DE-A1- 10 062 839
- DE-A1-102013 209 488
- DE-C1- 19 814 097
- US-A1- 2005 035 656

## Beschreibung

Die Erfindung geht aus von einer Sensoranordnung für ein Fahrzeug.

Aus dem Stand der Technik sind Sensoranordnungen für Fahrzeuge bekannt, welche jeweils einen Radsensor mit mindestens einem Sensorelement je Fahrzeugrad aufweisen. Die einzelnen Radsensoren werden in der Regel über ein zweiadriges verdrilltes Kabel mit einem Steuergerät für ein Fahrzeugbremssystem verbunden, welches beispielsweise ABS-, ESP-, ASR- und/oder Hillhold-Funktionen (ABS: Antiblockiersystem, ESP: Elektronisches Stabilitätsprogramm, ASR: Antriebsschlupfregelung) ausführt. Üblicherweise ist ein erster Anschluss des mindestens einen Sensorelements über das Steuergerät mit einer Energiequelle verbunden (High-Side-Pfad), und ein zweiter Anschluss des mindestens einen Sensorelements ist über das Steuergerät mit Masse verbunden (Low-Side-Pfad). Ein durch das mindestens eine Sensorelement fließender Sensorstrom ist mit Informationen über Drehzahl und/oder Drehgeschwindigkeit des korrespondierenden Fahrzeugrads moduliert, wobei eine Auswerte und Steuereinheit des Steuergeräts den zwischen dem mindestens einen Sensorelement und Masse erfassten Sensorstrom auswertet.

Aus der DE 10 2015 202 335 A1 sind ein Sensorgehäuse für eine Radsensorvorrichtung, eine Radsensorvorrichtung, eine Radlagervorrichtung und ein Verfahren zum Bilden einer zum Ermitteln einer Drehzahl und/oder einer Drehgeschwindigkeit eines Rads eines Fahrzeugs geeigneten Sensorik bekannt. Die Radsensorvorrichtung umfasst ein erstes Sensorelement, mittels welchem mindestens eine erste Sensorgröße bezüglich einer Drehzahl und/oder einer Drehgeschwindigkeit des Rads an mindestens eine Auswerte- und/oder Steuervorrichtung des Fahrzeugs bereitstellbar ist, und ein zusätzliches zweites Sensorelement, mittels welchem mindestens eine zweite Sensorgröße bezüglich der Drehzahl und/oder der Drehgeschwindigkeit des gleichen Rads an die mindestens eine Auswerte- und/oder Steuervorrichtung bereitstellbar ist.

Aus der DE 10 2013 209 488 A1 und der DE 100 62 839 A1 ist jeweils bekannt, dass eine Auswerte- und Steuereinheit einen modulierten Messstrom zwischen einer Energiequelle und einem Sensor erfassen kann.

Aus der US 2005/035656 A1 und der DE 100 41 989 A1 sind jeweils Sensoren bekannt, welche redundant von zwei Energiequellen versorgt werden können.

Aus der DE 198 14 097 C1 ist eine Sensoranordnung mit einem strommodulierten Sensor bekannt, welcher redundant von zwei Steuereinheiten versorgt wird, wobei beim Ausfall einer Energiequelle auf eine andere Energiequelle umgeschaltet wird. Hierbei wird ein modulierter Messstrom zwischen dem Sensor und Masse gemessen.

### Offenbarung der Erfindung

Die Sensoranordnung für ein Fahrzeug mit den Merkmalen des unabhängigen Patentanspruchs 1 hat den Vorteil, dass ein Sensorsignal des jeweiligen Sensorelements über einen Abgriff zwischen Energiequelle und Sensorelement (High-Side-Pfad) innerhalb eines ersten Steuergeräts sowie über einen Abgriff zwischen dem Sensorelement und Masse (Low-Side-Pfad) in einem zweiten Steuergerät zur Verfügung steht und somit von zwei Auswerte- und Steuereinheiten gleichzeitig ausgewertet werden kann. Zudem kann die Spannungsversorgung der einzelnen Sensorelemente zwischen zwei Energiequellen umgeschaltet werden, so dass bei Ausfall einer ersten Energiequelle automatisch auf eine zweite Energiequelle umgeschaltet werden kann. Durch die Verwendung von nur einem einfachen Sensorelement je Messstelle, dessen Sensorsignal von zwei Steuergeräten redundant ausgewertet wird, ergibt sich bei annähernd gleicher redundanter Auswertesicherheit eine deutliche Kostenreduktion im Vergleich zur Verwendung von zwei Sensorelementen je Messstelle, da Sensorsignale von allen Messstellen in den beiden Steuergeräten ausgewertet werden und die Ausfallwahrscheinlichkeit der Sensorelemente gering ist.

Ausführungsformen der vorliegenden Erfindung stellen eine Sensoranordnung für ein Fahrzeug, mit einem Sensorelement und mindestens zwei Steuergeräten zur Verfügung, welche jeweils eine Auswerte- und Steuereinheit und eine Energiequelle aufweisen. Hierbei ist in einem ersten Steuergerät eine erste Auswerte- und Steuereinheit mit einer ersten Energiequelle verbunden, und in einem zweiten Steuergerät ist eine zweite Auswerte- und Steuereinheit mit einer zweiten Energiequelle verbunden. Das erste Steuergerät umfasst eine Umschaltvorrichtung, welche einen ersten Anschluss des Sensorelements mit der ersten Energiequelle und/oder mit der zweiten Energiequelle verbindet. Zudem ist ein zweiter Anschluss des Sensorelements mit dem zweiten Steuergerät verbunden. Ein durch das Sensorelement fließender Sensorstrom ist mit Informationen über eine erfasste Messgröße moduliert, wobei die erste Auswerte und Steuereinheit den zwischen der verbundenen Energiequelle und dem Sensorelement erfassten Sensorstrom auswertet und die zweite Auswerte- und Steuereinheit den zwischen dem Sensorelement und Masse erfassten Sensorstrom auswertet. Des Weiteren verbindet die Umschaltvorrichtung bei Ausfall der verbundenen Energiequelle den ersten Anschluss des Sensorelements mit der anderen Energiequelle.

In der Regel können Ausführungsformen der erfindungsgemäßen Sensoranordnung mehrere Sensorelemente umfassen, welche verteilt im Fahrzeug an jeweils einer Messstelle angeordnet sind. So können Ausführungsformen der vorliegenden Sensoranordnung vorzugsweise in einem Fahrzeugbremssystem eingesetzt werden. In einem solchen Bremssystem können die Messstellen beispielsweise jeweils einem Fahrzeugrad zugeordnet werden, wobei ein korrespondierendes Sensorelement zumindest eine Drehzahl und/oder Drehgeschwindigkeit des zugeordneten Fahrzeugrads erfassen kann. Selbstverständlich können auch andere Messgrößen, wie beispielsweise Temperatur, Druck usw. an einer solchen Messstelle erfasst werden.

Unter der Auswerte- und Steuereinheit kann vorliegend eine elektrische Schaltung verstanden werden, welche erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Unter dem Steuergerät kann vorliegend ein elektrisches Gerät, wie beispielsweise ein Bremsensteuergerät, verstanden werden, welches in Verbindung mit einem hydraulischen Bremssystem verschiedene Bremsfunktionen, wie beispielsweise ABS-, ESP-, ASR- und/oder Hillhold-Funktionen (ABS: Antiblockiersystem, ESP: Elektronisches Stabilitätsprogramm, ASR: Antriebsschlupfregelung) ausführen kann. Hierbei können die beiden Steuergeräte im Normalbetrieb verschiedene Bremsfunktionen ausführen. Bei einem Ausfall eines der Steuergeräte kann vorgesehen werden, dass das andere Steuergerät die Bremsfunktionen des ausgefallenen Steuergeräts übernimmt.

Unter einem Sensorelement wird vorliegend ein elektrisches Bauteil verstanden, welches im Bereich eines zugeordneten Fahrzeugrads eine physikalische Größe bzw. eine Änderung einer physikalischen Größe direkt oder indirekt erfasst und vorzugsweise in ein elektrisches Sensorsignal umwandelt. Dies kann beispielsweise über das Aussenden und/oder das Empfangen von Schall- und/oder elektromagnetischen Wellen und/oder über ein Magnetfeld bzw. die Änderung eines Magnetfelds erfolgen. Möglich sind optische Sensorelemente, welche beispielsweise eine Fotoplatte und/oder eine fluoreszierende Fläche und/oder einen Halbleiter aufweisen, welche das Auftreffen bzw. die Intensität, die Wellenlänge, die Frequenz, den Winkel usw. der empfangen Welle detektieren, wie beispielsweise Infrarotsensorelemente. Ebenso ist ein akustisches Sensorelement denkbar, wie beispielsweise ein Ultraschallsensorelement und/oder ein Hochfrequenzsensorelement und/oder ein Radarsensorelement und/oder ein Sensorelement, welches auf ein Magnetfeld reagiert, wie beispielsweise ein Hallsensorelement und/oder ein magnetoresistives Sensorelement und/oder ein induktives Sensorelement, welches die Änderung eines Magnetfeldes beispielsweise über die durch magnetische Induktion entstehende Spannung registriert.

Durch die in den abhängigen Ansprüchen aufgeführten Maßnahmen und Weiterbildungen sind vorteilhafte Verbesserungen der im unabhängigen Patentanspruch 1 angegebenen Sensoranordnung für ein Fahrzeug möglich.

Besonders vorteilhaft ist, dass die Umschaltvorrichtung zumindest für jedes verbundene Sensorelement zwei Dioden mit einem gemeinsamen Knotenpunkt umfassen kann, an welchem eine Versorgungsspannung für das mit dem gemeinsamen Knotenpunkt verbundene Sensorelement anliegen kann. Hierbei kann eine erste Diode die erste Energiequelle in Durchlassrichtung mit dem gemeinsamen Knotenpunkt verbinden, und eine zweite Diode kann die zweite Energiequelle in Durchlassrichtung mit dem gemeinsamen Knotenpunkt verbinden, so dass am gemeinsamen Knotenpunkt eine Versorgungsspannung anliegen kann, welche aus der ersten und/oder der zweiten Energiequelle gespeist ist, wobei sich die höhere Spannung durchsetzt. Dies ermöglicht auf Kosten eines höheren Spannungsabfalls eine einfach und kostengünstige Implementierung der Umschaltvorrichtung, welche automatisch ohne Ansteuersignal zwischen den Spannungsquellen umschalten kann.

Alternativ kann die Umschaltvorrichtung zumindest für jedes verbundene Sensorelement zwei Schaltelemente mit einem gemeinsamen Knotenpunkt umfassen, an welchem eine Versorgungsspannung für das mit dem gemeinsamen Knotenpunkt verbundene Sensorelement anliegen kann. Hierbei kann eine erste Ansteuereinheit ein erstes Schaltelement ansteuern, welches den gemeinsamen Knotenpunkt mit der ersten Energiequelle verbindet, und eine zweite Ansteuereinheit kann ein zweites Schaltelement ansteuern, welches den gemeinsamen Knotenpunkt mit der zweiten Energiequelle verbindet. Bei dieser Ausführungsform kann festgelegt werden, welche der Energiequellen bevorzugt zur Versorgung der verbundenen Sensorelemente eingesetzt wird. Zudem kann bei Verwendung von Feldeffekttransistoren als Schaltelemente der Spannungsabfall im Sensorstrompfad reduziert werden. So kann beispielsweise die erste Ansteuereinheit das erste Schaltelement ansteuern und den gemeinsamen Knotenpunkt mit der ersten Energiequelle verbinden, wenn eine erste Spannungserkennung, erkennt, dass die erste Energiequelle eine erste Spannung bereitstellt. Zudem kann die zweite Ansteuereinheit das zweite Schaltelement ansteuern und den gemeinsamen Knotenpunkt mit der zweiten Energiequelle verbinden, wenn eine zweite Spannungserkennung, erkennt, dass die zweite Energiequelle eine zweite Spannung bereitstellt und eine Vorrangschaltung die Ansteuerung des zweiten Schaltelements freigibt. Die Vorrangschaltung kann die Ansteuerung des zweiten Schaltelements freigeben, wenn die erste Spannungserkennung erkennt, dass die erste Energiequelle keine Spannung bereitstellt.

In weiterer vorteilhafter Ausgestaltung der Sensoranordnung kann im ersten Steuergerät eine Stromverarbeitung angeordnet werden, welche den jeweiligen Sensorstrom zwischen der verbundenen Energiequelle und dem jeweiligen Sensorelement erfassen und als jeweiligen Messstrom der ersten Auswerte und Steuereinheit zur Verfügung stellen kann. Hierbei kann die zweite Auswerte- und Steuereinheit den jeweiligen Sensorstrom direkt als zweiten Messstrom empfangen und auswerten. Dadurch wird nur innerhalb des ersten Steuergeräts eine Schaltungsanpassung vorgenommen, welche den Sensorstrom der Sensorelemente der ersten Auswerte- und Steuereinheit zur Verfügung stellt.

In weiterer vorteilhafter Ausgestaltung der Sensoranordnung kann die Stromverarbeitung zumindest für jedes verbundene Sensorelement einen in den Strompfad eingeschleiften Stromsensor umfassen, welcher einen Bruchteil des jeweiligen Sensorstroms abzweigt und an die erste Auswerte- und Steuereinheit weiterleitet. Zudem leitet der Stromsensor den Sensorstrom an das zugehörige Sensorelement weiter. Dadurch wird der Sensorstrom, welcher in den ersten Anschluss des zugehörigen Sensorelements hineinfließt gemessen und ein äquivalenter, jedoch deutlich kleinerer Bruchteil des Sensorstroms an die erste Auswerte- und Steuereinheit weitergeleitet. Dadurch kann die Verlustleistung im ersten Steuergerät reduziert werden.

In weiterer vorteilhafter Ausgestaltung der Sensoranordnung kann die erste Auswerte und Steuereinheit zumindest für jedes verbundene Sensorelement eine Eingangsbeschaltung aufweisen, welche den Bruchteil des jeweiligen Sensorstroms in ein Messsignal wandelt, welches den jeweiligen Sensorstrom entspricht. Als Messsignal kann beispielweise eine Spannung erzeugt werden, welche den jeweiligen Sensorstrom repräsentiert. Bei dieser Ausführungsform kann die Eingangsbeschaltung beispielweise einen ohmschen Widerstand mit einem höheren Widerstandswert umfassen, welcher aus dem reduzierten Messstrom einen Spannungswert erzeugt, welcher den Sensorstrom repräsentiert. Dadurch sind keine Änderungen der nachfolgenden Auswerteschaltung bzw. des nachfolgenden Auswerteverfahrens erforderlich.

Alternativ kann die Stromverarbeitung zumindest für jedes verbundene Sensorelement eine Stromaufbereitung umfassen, welche zwischen dem jeweiligen Stromsensor und der ersten Auswerte und Steuereinheit angeordnet ist und den Bruchteil des jeweiligen Sensorstroms in einen zugehörigen Messstrom umwandelt, welcher dem jeweiligen Sensorstrom entspricht. Bei dieser Ausführungsform sind keine Änderungen an der ersten Auswerte- und Steuereinheit erforderlich.

In weiterer vorteilhafter Ausgestaltung der Sensoranordnung kann die Stromverarbeitung eine erste Hilfsspannungserzeugung mit einem Energiespeicher umfassen, welcher an einem Summenpunkt eine erste Hilfsspannung ausgibt, welche niedriger als die Versorgungsspannungen der Energiequellen ist. Zudem kann der Summenpunkt zum Laden des Energiespeichers zwischen der jeweiligen Umschaltvorrichtung und dem jeweiligen Stromsensor mit den Sensorstrompfaden der verbundenen Sensorelemente verbunden werden. Die erste Hilfsspannung kann beispielsweise um ca. 1V niedriger als die Versorgungsspannungen der Energiequellen sein. Der Summenpunkt kann beispielsweise jeweils über eine Rückspeiseschutzdiode und eine Stromquelle mit den Sensorstrompfaden der verbundenen Sensorelemente verbunden werden. Des Weiteren kann die Stromverarbeitung eine zweite Hilfsspannungserzeugung umfassen, welche als Gleichspannungswandler ausgeführt werden kann und die erste Hilfsspannung in eine deutlich niedrigere zweite Hilfsspannung wandeln kann. Diese zweite Hilfsspannung kann vorzugsweise die Stromaufbereitung versorgen. Dadurch wirkt die Stromaufbereitung als belastbare Energiequelle, welche mittels der ersten Hilfsspannungsquelle gespeist wird. Um die Verlustleistung insgesamt gering zu halten, weist diese Hilfsspannungsquelle eine Spannung von ca. 2, 5V bis 3V auf. In vorteilhafter Weise wird die Energie dieser ersten Hilfsspannungsquelle aus den am ersten Eingang der verbundenen Sensorelemente anliegenden Versorgungsspannung aus der ersten bzw. zweiten Energiequelle erzeugt.

In weiterer vorteilhafter Ausgestaltung der Sensoranordnung kann die Stromverarbeitung eine Notspannungserzeugung umfassen, welche ein verbundenes Sensorelement bei fehlender Versorgungsspannung mit einer dritten Hilfsspannung versorgen kann, welche aus den Sensorstrompfaden der anderen verbundenen Sensorelemente erzeugt wird. Die Notspannungserzeugung greift, wenn bei einem Sensorelement beide Versorgungsspannungen ausfallen. Die Notspannungserzeugung kann beispielsweise einen Gleichspannungswandler, welcher die zweite Hilfsspannung von ca. 2,5V bis 3V in die höhere dritte Hilfsspannung von ca. 8V wandelt, eine Schaltvorrichtung und eine Rückspeiseschutzdiode umfassen, wobei die Schaltvorrichtung die dritte Hilfsspannung mit dem betroffenen Sensorstrompfad verbindet.

In weiterer vorteilhafter Ausgestaltung der Sensoranordnung können die Stromverarbeitung und die Umschaltvorrichtung in einem Verschaltungsmodul zusammengefasst werden, welches vorzugsweise als ASIC-Baustein ausgeführt werden kann.

In weiterer vorteilhafter Ausgestaltung der Sensoranordnung können die einzelnen Sensorelemente jeweils über eine Zweidrahtleitung mit dem ersten Steuergerät verbunden werden. Zudem können die mindestens zwei Steuergeräte über eine mehradrige Leitung miteinander verbunden werden, welche für jedes der mit dem ersten Steuergerät verbundenen Sensorelement eine Ader zur Übertragung des jeweiligen Sensorstroms und eine Ader zur Verbindung der Umschaltvorrichtung mit der zweiten Energiequelle umfasst.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels einer erfindungsgemäßen Sensoranordnung für ein Fahrzeug.
Fig. 2 zeigt ein schematisches Blockdiagramm eines ersten Ausführungsbeispiels einer Umschaltvorrichtung der erfindungsgemäßen Sensoranordnung für ein Fahrzeug aus Fig. 1.
Fig. 3 zeigt ein schematisches Blockdiagramm eines zweiten Ausführungsbeispiels der Umschaltvorrichtung der erfindungsgemäßen Sensoranordnung für ein Fahrzeug aus Fig. 1.
Fig. 4 zeigt ein schematisches Blockdiagramm eines ersten Ausführungsbeispiels einer Stromverarbeitung der erfindungsgemäßen Sensoranordnung für ein Fahrzeug aus Fig. 1.
Fig. 5 zeigt ein schematisches Blockdiagramm eines zweiten Ausführungsbeispiels der Stromverarbeitung der erfindungsgemäßen Sensoranordnung für ein Fahrzeug aus Fig. 1.
Fig. 6 zeigt ein schematisches Blockdiagramm eines dritten Ausführungsbeispiels der Stromverarbeitung der erfindungsgemäßen Sensoranordnung für ein Fahrzeug aus Fig. 1.

### Ausführungsformen der Erfindung

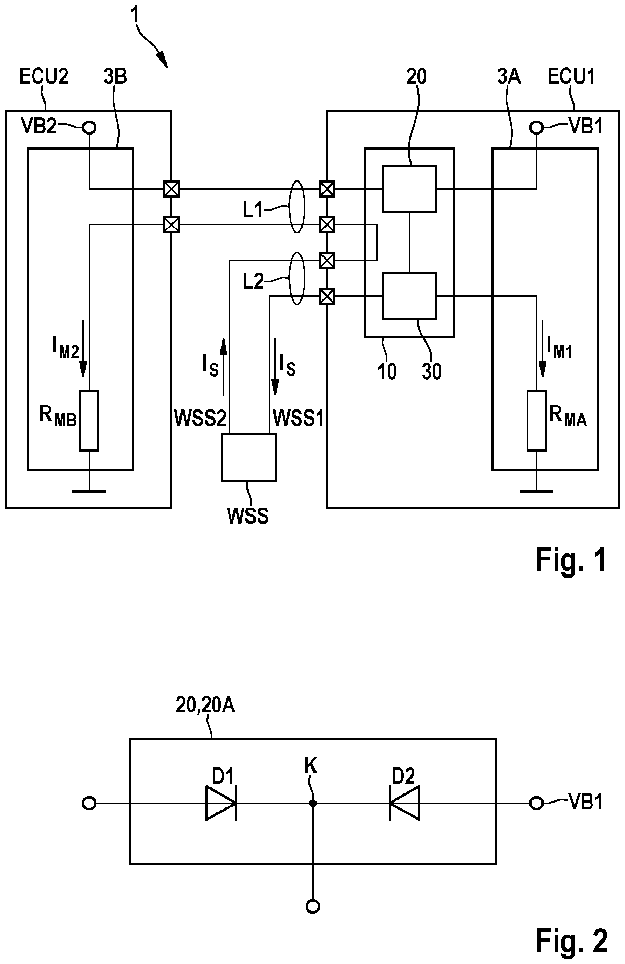

Wie aus Fig. 1 ersichtlich ist, umfasst das dargestellte Ausführungsbeispiel einer erfindungsgemäßen Sensoranordnung 1 für ein Fahrzeug ein Sensorelement WSS und mindestens zwei Steuergeräte ECU1, ECU2, welche jeweils eine Auswerte- und Steuereinheit 3A, 3B und eine Energiequelle VB1, VB2 aufweisen. Wie aus Fig. 1 weiter ersichtlich ist, ist in einem ersten Steuergerät ECU1 eine erste Auswerte- und Steuereinheit 3A mit einer ersten Energiequelle VB1 verbunden. In einem zweiten Steuergerät ECU2 ist eine zweite Auswerte- und Steuereinheit 3B mit einer zweiten Energiequelle VB2 verbunden. Hierbei umfasst das erste Steuergerät ECU1 eine Umschaltvorrichtung 20, welche einen ersten Anschluss WSS1 des Sensorelements WSS mit der ersten Energiequelle VB1 und/oder mit der zweiten Energiequelle VB2 verbindet. Ein zweiter Anschluss WSS2 des Sensorelements WSS ist mit dem zweiten Steuergerät ECU2 verbunden. Zudem ist ein durch das jeweilige Sensorelement WSS fließender Sensorstrom I_{S} mit Informationen über eine erfasste Messgröße moduliert, wobei die erste Auswerte und Steuereinheit 3A den zwischen der verbundenen Energiequelle VB1, VB2 und dem Sensorelement WSS erfassten Sensorstrom I_{S} auswertet, und die zweite Auswerte- und Steuereinheit 3B den zwischen dem Sensorelement WSS und Masse erfassten Sensorstrom I_{S} auswertet. Das bedeutet, dass die erste Auswerte- und Steuereinheit 3A den im High-Side-Pfad erfassten Sensorstrom I_{S} auswertet und die zweite Auswerte- und Steuereinheit 3B den im Low-Side-Pfad erfassten Sensorstrom I_{S} auswertet. Die Umschaltvorrichtung 20 verbindet den ersten Anschluss WSS1 des Sensorelements WSS bei Ausfall der verbundenen Energiequelle VB1, VB2 mit der anderen Energiequelle VB2, VB1. Das bedeutet, dass die Umschaltvorrichtung 20 bei Ausfall der verbundenen ersten Energiequelle VB1 auf die zweite Energiequelle VB2 umschaltet und bei Ausfall der verbundenen zweiten Energiequelle VB2 auf die erste Energiequelle VB1 umschaltet.

In der Regel umfassen Ausführungsformen der erfindungsgemäßen Sensoranordnung 1 für ein Fahrzeug mehrere Messstellen mit jeweils einem solchen Sensorelement WSS. Aus Gründen der Übersichtlichkeit ist in Fig. 1 nur eines der Sensorelemente WSS dargestellt. So werden Ausführungsformen der vorliegenden Sensoranordnung 1 vorzugsweise in einem Fahrzeugbremssystem eingesetzt. In einem solchen Bremssystem können die Messstellen beispielsweise jeweils einem Fahrzeugrad zugeordnet werden, wobei die Sensorelemente WSS zumindest eine Drehzahl und/oder Drehgeschwindigkeit des korrespondierenden Fahrzeugrads erfassen. Bei einem normalen Personenkraftwagen mit vier Rädern, weist die Sensoranordnung 1 somit vier solche Sensorelemente WSS auf. Selbstverständlich können auch andere Messgrößen, wie beispielsweise Temperatur, Druck usw. an einer solchen Messstelle erfasst werden.

Hierbei können die zweiten Anschlüsse WSS2 der Sensorelemente WSS direkt oder über zwischengeschaltete Bauteile mit Masse verbunden werden.

Wie aus Fig. 2 ersichtlich ist, umfasst die Umschaltvorrichtung 20A im dargestellten ersten Ausführungsbeispiel zumindest für jedes verbundene Sensorelement WSS zwei Dioden D1, D2 mit einem gemeinsamen Knotenpunkt K, an welchem eine Versorgungsspannung für das mit dem gemeinsamen Knotenpunkt K verbundene Sensorelement WSS anliegt. Hierbei verbindet eine erste Diode D1 die erste Energiequelle VB1 in Durchlassrichtung mit dem gemeinsamen Knotenpunkt K. Eine zweite Diode D2 verbindet die zweite Energiequelle VB2 in Durchlassrichtung mit dem gemeinsamen Knotenpunkt K. Dadurch liegt am gemeinsamen Knotenpunkt K eine Versorgungsspannung an, welche aus der ersten und/oder der zweiten Energiequelle VB1, VB2 gespeist ist, wobei sich die höhere Spannung durchsetzt. Das bedeutet, dass der Knotenpunkt K bei Ausfall der ersten Energiequelle VB1 von der zweiten Energiequelle VB2 gespeist wird und umgekehrt. Sind beide Kanäle vollständig symmetrisch, dann wird der Knotenpunkt K von beiden Energiequellen VB1, VB2 zu gleichen Teilen gespeist.

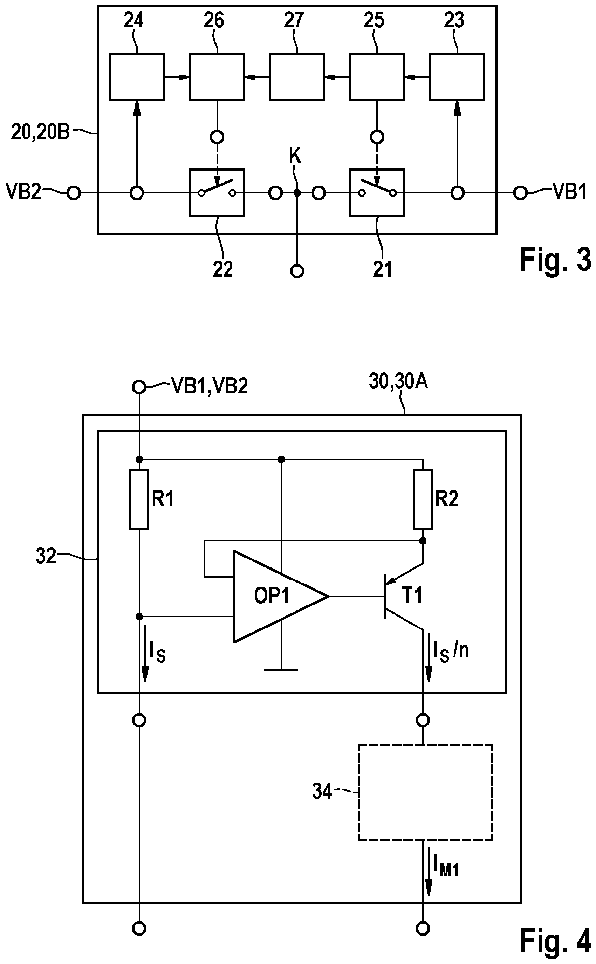

Wie aus Fig. 3 weiter ersichtlich ist, umfasst die Umschaltvorrichtung 20B im dargestellten zweiten Ausführungsbeispiel zumindest für jedes verbundene Sensorelement WSS zwei Schaltelemente 21, 22, welche vorzugsweise als Feldeffekttransistoren ausgeführt sind, mit einem gemeinsamen Knotenpunkt K, an welchem eine Versorgungsspannung für das mit dem gemeinsamen Knotenpunkt K verbundene Sensorelement WSS anliegt. Wie aus Fig. 3 weiter ersichtlich ist, steuert eine erste Ansteuereinheit 25 ein erstes Schaltelement 21 an, welches den gemeinsamen Knotenpunkt K mit der ersten Energiequelle VB1 verbindet. Eine zweite Ansteuereinheit 26 steuert ein zweites Schaltelement 22 an, welches den gemeinsamen Knotenpunkt K mit der zweiten Energiequelle VB2 verbindet. Wie aus Fig. 3 weiter ersichtlich ist, erkennt eine erste Spannungserkennung 23, ob die erste Energiequelle VB1 eine erste Spannung bereitstellt. Eine zweite Spannungserkennung 24 erkennt, ob die zweite Energiequelle VB2 eine zweite Spannung bereitstellt. Zudem umfasst die Umschaltvorrichtung 20B eine Vorrangschaltung 27, welche im dargestellten zweiten Ausführungsbeispiel die erste Energiequelle VB1 der zweiten Energiequelle vorzieht. Bei einem alternativen nicht dargestellten Ausführungsbeispiel kann die Vorrangschaltung 27 die zweite Energiequelle VB2 der ersten Energiequelle VB1 vorziehen. Die erste Ansteuereinheit 25 steuert das erste Schaltelement 21 an und verbindet den gemeinsamen Knotenpunkt K mit der ersten Energiequelle VB1, wenn die erste Spannungserkennung 23 erkennt, dass die erste Energiequelle VB1 die erste Spannung bereitstellt. Die zweite Ansteuereinheit 26 steuert das zweite Schaltelement 22 an und verbindet den gemeinsamen Knotenpunkt K mit der zweiten Energiequelle VB2, wenn die zweite Spannungserkennung 24 erkennt, dass die zweite Energiequelle VB2 die zweite Spannung bereitstellt und die Vorrangschaltung 27 die Ansteuerung des zweiten Schaltelements 22 freigibt. Im dargestellten zweiten Ausführungsbeispiel gibt die Vorrangschaltung 27 die Ansteuerung des zweiten Schaltelements 22 frei, wenn die erste Spannungserkennung 23 erkennt, dass die erste Energiequelle VB1 keine Spannung bereitstellt. Durch die Vorrangschaltung 27 kann die zweite Energiequelle VB2 schneller mit dem gemeinsamen Knotenpunkt K verbunden werden, da die Vorrangschaltung 27 nur ein von der zweiten Ansteuerschaltung 26 erzeugtes Ansteuersignal auf das zweite Schaltelement 22 durchschaltet.

Wie aus Fig. 1 weiter ersichtlich ist, ist im ersten Steuergerät ECU1 eine Stromverarbeitung 30 angeordnet, welche den jeweiligen Sensorstrom I_{S} zwischen der verbundenen Energiequelle VB1, VB2 und dem jeweiligen Sensorelement WSS erfasst und als jeweiligen Messstrom I_{M1} der ersten Auswerte und Steuereinheit 3A zur Verfügung stellt. Der zweite Anschluss WSS2 des jeweiligen Sensorelements WSS ist über einen Messwiderstand R_{MB} im zweiten Steuergerät ECU2 mit Masse verbunden. Dadurch erfasst die zweite Auswerte- und Steuereinheit 3B den jeweiligen Sensorstrom I_{S} im Low-Side-Pfad direkt als zweiten Messstrom I_{M2} und wertet diesen aus.

Nachfolgend werden unter Bezugnahme auf Fig. 4 bis 6 verschiedene Ausführungsbeispiele der Stromverarbeitung 30 beschrieben. Wie aus Fig. 4 bis 6 ersichtlich ist, umfasst die Stromverarbeitung 30 zumindest für jedes verbundene Sensorelement WSS einen in den Strompfad eingeschleiften Stromsensor 32, welcher einen Bruchteil I_{S}/n des jeweiligen Sensorstroms I_{S} abzweigt und an die erste Auswerte- und Steuereinheit 3A weiterleitet. Zudem leitet der Stromsensor 32 den Sensorstrom I_{S} zum ersten Anschluss WSS1 des zugehörigen Sensorelements WSS.

Wie aus Fig. 4 weiter ersichtlich ist, umfasst der Stromsensor 32 im dargestellten Ausführungsbeispiel zwei ohmsche Widerstände R1, R2, einen Operationsverstärker OP1 und einen Transistor T1. Die genannten elektrischen Bauteile sind wie dargestellt miteinander verschaltet, so dass der Stromsensor 32 im High-Side-Pfad des ersten Steuergeräts ECU1 im Gegensatz zu einer einfachen Stromspiegelschaltung einen geringen Spannungsabfall verursacht. Durch den Stromsensor 32 wird der Sensorstrom I_{S}, welcher in den ersten Anschluss WSS1 des Sensorelements WSS hineinfließt, gemessen und ein äquivalenter, jedoch deutlich kleinerer Strom I_{S}/n wird der ersten Auswerte- und Steuereinheit 3A zugeführt, um die Verlustleistung im ersten Steuergerät ECU1 zu reduzieren. Bei der Abzweigung des zusätzlichen Bruchteils I_{S}/n des Sensorstroms I_{S} ist zu beachten, dass die Energiequellen VB1, VB2 in der Lage sind, diesen zusätzlichen Bruchteil I_{S}/n des Sensorstroms I_{S} zur Verfügung zu stellen. So sollte ein Gesamtstrom (I_{S}/n + I_{S}), welcher aus der verbundenen Energiequelle VB1, VB2 entnommen wird, einen vorgegebenen Maximalwert von beispielsweise 50mA nicht übersteigen. Bei einem v-Protokoll weist der Sensorstrom I_{S} Werte von 7mA/14mA/28mA auf. Diese Werte können durch den Stromsensor 32 deutlich reduziert werden. So kann für n beispielweise ein Wert von 50 gewählt werden. Um der ersten Auswerte- und Steuereinheit 3A für die Auswertung die entsprechenden Messsignale für das v-Protokoll zu erzeugen, kann eine Eingangsbeschaltung, welche die erste Auswerte und Steuereinheit 3A zumindest für jedes verbundene Sensorelement WSS aufweist, entsprechend angepasst werden, um den Bruchteil Is/n des jeweiligen Sensorstroms I_{S} in ein Messsignal zu wandeln, welches dem jeweiligen Sensorstrom I_{S} entspricht. So kann beispielsweise ein erster Messwiderstand R_{MA} von ca. 10 Ohm um den Faktor n, der hier dem Wert 50 entspricht, auf ca. 500 Ohm erhöht werden, um den Bruchteil I_{S}/n des jeweiligen Sensorstroms I_{S} aus dem Stromsensor 32 direkt verarbeiten zu können. Dadurch kann der Gesamtaufwand zur Anpassung des ersten Steuergeräts ECU1 erheblich reduziert, da der eine nachfolgende Stromaufbereitung 34 zur Bereitstellung des ersten Messstroms I_{M1}, welche in Fig. 4 nur gestrichelt dargestellt ist, entfallen könnte.

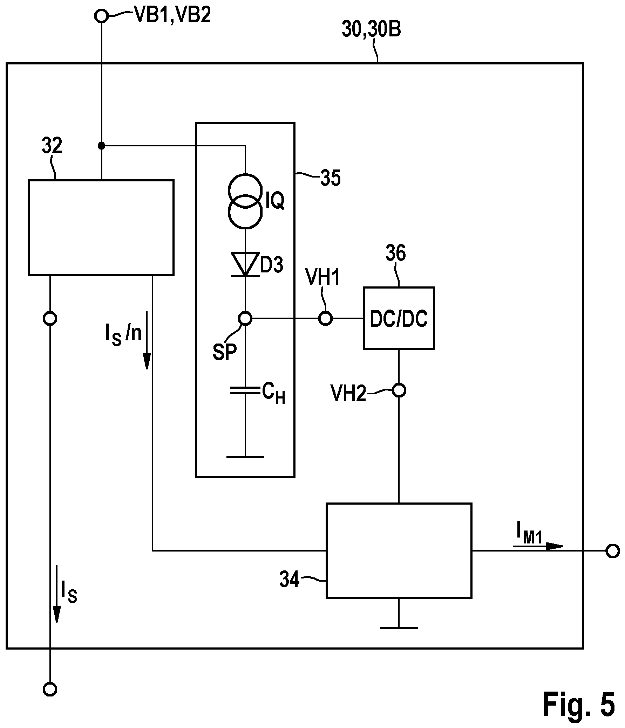

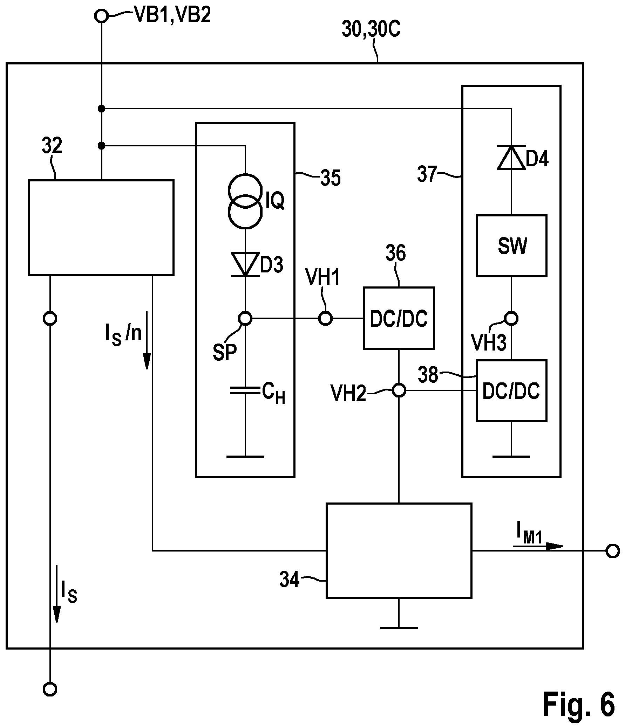

Wie aus Fig. 5 und 6 ersichtlich ist, umfasst die Stromverarbeitung 30 in den dargestellten Ausführungsbeispielen zumindest für jedes verbundene Sensorelement WSS eine Stromaufbereitung 34, welche zwischen dem jeweiligen Stromsensor 32 und der ersten Auswerte und Steuereinheit 3A angeordnet ist. Die Stromaufbereitung 34 ist als belastbare Energiequelle ausgeführt und wandelt den Bruchteil I_{S}/n des jeweiligen Sensorstroms I_{S} in einen zugehörigen ersten Messstrom I_{M1} um, welcher dem jeweiligen Sensorstrom I_{S} entspricht. Wie aus Fig. 5 und 6 weiter ersichtlich ist, umfasst die Stromverarbeitung 30 eine erste Hilfsspannungserzeugung 35 mit einem Energiespeicher C_{H}, welcher an einem Summenpunkt SP eine erste Hilfsspannung VH1 ausgibt. Die erste Hilfsspannung VH1 ist ca. 1V niedriger als die Versorgungsspannungen der Energiequellen VB1, VB2, welche beispielsweise jeweils einen Wert von ca. 12V aufweisen. Der Summenpunkt SP ist zum Laden des Energiespeichers C_{H} zwischen der jeweiligen Umschaltvorrichtung 20 und dem jeweiligen Stromsensor 32 mit den Sensorstrompfaden der verbunden Sensorelemente WSS verbunden. Bei den dargestellten Ausführungsbeispielen ist der Summenpunkt SP jeweils über eine Rückspeiseschutzdiode D3 und eine Stromquelle IQ mit den Sensorstrompfaden der verbundenen Sensorelemente WSS verbunden. Zudem umfasst die Stromverarbeitung 30 eine zweite Hilfsspannungserzeugung 36, welche als Gleichspannungswandler DC/DC ausgeführt ist und die erste Hilfsspannung VH1 in eine deutlich niedrigere zweite Hilfsspannung VH2 von beispielsweise 2,5V bis 3V wandelt, um die Verlustleistung insgesamt gering zu halten. Die zweite Hilfsspannungserzeugung 36 versorgt die Stromaufbereitung 34 mit der zweiten Hilfsspannung VH2.

Wie aus Fig. 6 weiter ersichtlich ist, umfasst die Stromverarbeitung 30 im dargestellten Ausführungsbeispiel eine Notspannungserzeugung 37, welche ein verbundenes Sensorelement WSS bei fehlender Versorgungsspannung mit einer dritten Hilfsspannung VH3 von ca. 8V versorgt, welche aus den Sensorstrompfaden der anderen verbundenen Sensorelemente WSS erzeugt wird. Die Notspannungserzeugung 37 umfasst im dargestellten Ausführungsbeispiel einen Gleichspannungswandler 38, welcher die zweite Hilfsspannung VH2 in die höhere dritte Hilfsspannung VH3 wandelt, eine Schaltvorrichtung SW und eine Rückspeiseschutzdiode D4. Die Schaltvorrichtung SW verbindet die dritte Hilfsspannung VH3 mit dem betroffenen Sensorstrompfad, so dass die dritte Hilfsspannung VH3 das zugehörige Sensorelement WSS versorgt.

Vorzugsweise sind die Stromverarbeitung 30 und die Umschaltvorrichtung 20 in einem Verschaltungsmodul 10 zusammengefasst, welches vorzugsweise als ASIC-Baustein ausgeführt ist. Die einzelnen Sensorelemente WSS sind jeweils über eine Zweidrahtleitung L2 mit dem ersten Steuergerät ECU1 verbunden. Dadurch ergibt sich ein vereinfachter Verkabelungsaufwand. Die beiden Steuergeräte ECU1, ECU2 sind über eine mehradrige Leitung L1 miteinander verbunden, welche für jedes der mit dem ersten Steuergerät ECU1 verbundenen Sensorelement WSS eine Ader zur Übertragung des jeweiligen Sensorstroms I_{S} und eine Ader zur Verbindung der Umschaltvorrichtung 20 mit der zweiten Energiequelle VB2 umfasst.

Ausführungsformen der vorliegenden Erfindung stellen eine Sensoranordnung für ein Fahrzeug zur Verfügung, bei welcher ein aus dem Stand der Technik bekanntes einfaches Sensorelement gleichzeitig von zwei Steuergeräten verwendet wird, wobei ein Steuergerät, hier das zweite Steuergerät, mit einer aus dem Stand der Technik bekannten Auswerte- und Steuereinheit verwendet werden kann. Lediglich innerhalb des ersten Steuergeräts ist eine Schaltungsanpassung erforderlich.

## Patentansprüche

1. Sensoranordnung (1) mit einem Sensorelement (WSS) und mindestens zwei Steuergeräten (ECU1, ECU2), welche jeweils eine Auswerte- und Steuereinheit (3A, 3B) und eine Energiequelle (VB1, VB2) aufweisen, wobei ein erstes Steuergerät (ECU1) so ausgeführt ist, dass eine erste Auswerte- und Steuereinheit (3A) mit einer ersten Energiequelle (VB1) verbunden ist, und ein zweites Steuergerät (ECU2) so ausgeführt ist, dass eine zweite Auswerte- und Steuereinheit (3B) mit einer zweiten Energiequelle (VB2) verbunden ist, wobei das erste Steuergerät (ECU1) eine Umschaltvorrichtung (20) umfasst, welche so ausgeführt ist, dass ein erster Anschluss (WSS1) des Sensorelements (WSS) mit der ersten Energiequelle (VB1) und/oder mit der zweiten Energiequelle (VB2) verbunden ist, wobei ein zweiter Anschluss (WSS2) des Sensorelements (WSS) mit dem zweiten Steuergerät (ECU2) verbunden ist, wobei ein durch das Sensorelement (WSS) fließender Sensorstrom (I_{S}) im Betrieb mit Informationen über eine erfasste Messgröße moduliert ist, wobei die erste Auswerte und Steuereinheit (3A) ausgeführt ist, den zwischen der verbundenen Energiequelle (VB1, VB2) und dem Sensorelement (WSS) erfassten Sensorstrom (I_{S}) auszuwerten, und die zweite Auswerte- und Steuereinheit (3B) ausgeführt ist, den zwischen dem Sensorelement (WSS) und Masse erfassten Sensorstrom (I_{S}) auszuwerten, und wobei die Umschaltvorrichtung (20) ausgeführt ist, bei Ausfall der verbundenen Energiequelle (VB1, VB2) den ersten Anschluss (WSS1) des Sensorelements (WSS) mit der anderen Energiequelle (VB2, VB1) zu verbinden.

2. Sensoranordnung (1) nach Anspruch 1, **dadurch gekennzeichnet, dass** mehrere Sensorelemente (WSS) vorgesehen sind, welche jeweils an einer Messstelle angeordnet sind.

3. Sensoranordnung (1) nach Anspruch 2, **dadurch gekennzeichnet, dass** die Messstellen jeweils einem Fahrzeugrad zugeordnet sind, wobei das zugehörige Sensorelement (WSS) ausgeführt ist, zumindest eine Drehzahl und/oder Drehgeschwindigkeit des korrespondierenden Fahrzeugrads zu erfassen.

4. Sensoranordnung (1) nach einem der Ansprüche 1 bis 3, **dadurch gekennzeichnet, dass** die Umschaltvorrichtung (20A) zumindest für jedes verbundene Sensorelement (WSS) zwei Dioden (D1, D2) mit einem gemeinsamen Knotenpunkt (K) umfasst, an welchem eine Versorgungsspannung für das mit dem gemeinsamen Knotenpunkt (K) verbundene Sensorelement (WSS) anliegt, wobei eine erste Diode (D1) ausgeführt ist, die erste Energiequelle (VB1) in Durchlassrichtung mit dem gemeinsamen Knotenpunkt (K) zu verbinden, und eine zweite Diode (D2) ausgeführt ist, die zweite Energiequelle (VB2) in Durchlassrichtung mit dem gemeinsamen Knotenpunkt (K) zu verbinden, so dass am gemeinsamen Knotenpunkt (K) eine Versorgungsspannung anliegt, welche aus der ersten und/oder der zweiten Energiequelle (VB1, VB2) gespeist ist, wobei sich die höhere Spannung durchsetzt.

5. Sensoranordnung (1) nach einem der Ansprüche 1 bis 3, **dadurch gekennzeichnet, dass** die Umschaltvorrichtung (20B) zumindest für jedes verbundene Sensorelement (WSS) zwei Schaltelemente (21, 22) mit einem gemeinsamen Knotenpunkt (K) umfasst, an welchem eine Versorgungsspannung für das mit dem gemeinsamen Knotenpunkt (K) verbundene Sensorelement (WSS) anliegt, wobei eine erste Ansteuereinheit (25) ausgeführt ist, ein erstes Schaltelement (21) anzusteuern, welches den gemeinsamen Knotenpunkt (K) mit der ersten Energiequelle (VB1) verbindet, und eine zweite Ansteuereinheit (26) ausgeführt ist, ein zweites Schaltelement (22) anzusteuern, welches den gemeinsamen Knotenpunkt (K) mit der zweiten Energiequelle (VB2) verbindet.

6. Sensoranordnung (1) nach Anspruch 5, **dadurch gekennzeichnet, dass** die erste Ansteuereinheit (25) ausgeführt ist, das erste Schaltelement (21) anzusteuern und den gemeinsamen Knotenpunkt (K) mit der ersten Energiequelle (VB1) zu verbinden, wenn eine erste Spannungserkennung (23), erkennt, dass die erste Energiequelle (VB1) eine erste Spannung bereitstellt, wobei die zweite Ansteuereinheit (26) ausgeführt ist, das zweite Schaltelement (22) anzusteuern und den gemeinsamen Knotenpunkt (K) mit der zweiten Energiequelle (VB2) zu verbinden, wenn eine zweite Spannungserkennung (24), erkennt, dass die zweite Energiequelle (VB2) eine zweite Spannung bereitstellt und eine Vorrangschaltung (27) die Ansteuerung des zweiten Schaltelements (22) freigibt, wobei die Vorrangschaltung (27) ausgeführt ist, die Ansteuerung des zweiten Schaltelements (22) freizugeben, wenn die erste Spannungserkennung (23) erkennt, dass die erste Energiequelle (VB1) keine Spannung bereitstellt.

7. Sensoranordnung (1) nach einem der Ansprüche 1 bis 6, **dadurch gekennzeichnet, dass** im ersten Steuergerät (ECU1) eine Stromverarbeitung (30) angeordnet ist, welche ausgeführt ist, den jeweiligen Sensorstrom (I_{S}) zwischen der verbundenen Energiequelle (VB1, VB2) und dem jeweiligen Sensorelement (WSS) zu erfassen und als jeweiligen Messstrom (I_{M1}) der ersten Auswerte und Steuereinheit (3A) zur Verfügung zu stellen.

8. Sensoranordnung (1) nach Anspruch 7, **dadurch gekennzeichnet, dass** die zweite Auswerte- und Steuereinheit (3B) ausgebildet ist, den jeweiligen Sensorstrom (I_{S}) direkt als zweiten Messstrom (I_{M2}) zu empfangen und auszuwerten.

9. Sensoranordnung (1) nach Anspruch 7 oder 8, **dadurch gekennzeichnet, dass** die Stromverarbeitung (30) zumindest für jedes verbundene Sensorelement (WSS) einen in den Strompfad eingeschleiften Stromsensor (32) umfasst, welcher ausgeführt ist, einen Bruchteil (I_{S}/n) des jeweiligen Sensorstroms (I_{S}) abzuzweigen und an die erste Auswerte- und Steuereinheit (3A) weiterzuleiten.

10. Sensoranordnung (1) nach Anspruch 9, **dadurch gekennzeichnet, dass** die erste Auswerte und Steuereinheit (3A) zumindest für jedes verbundene Sensorelement (WSS) eine Eingangsbeschaltung (R_{MA}) aufweist, welche ausgeführt ist, den Bruchteil (I_{S}/n) des jeweiligen Sensorstroms (I_{S}) in ein Messsignal zu wandeln, welches den jeweiligen Sensorstrom (I_{S}) entspricht.

11. Sensoranordnung (1) nach Anspruch 9, **dadurch gekennzeichnet, dass** die Stromverarbeitung (30) zumindest für jedes verbundene Sensorelement (WSS) eine Stromaufbereitung (34) umfasst, welche zwischen dem jeweiligen Stromsensor (32) und der ersten Auswerte und Steuereinheit (3A) angeordnet ist und ausgeführt ist, den Bruchteil (I_{S}/n) des jeweiligen Sensorstroms (I_{S}) in einen zugehörigen Messstrom (I_{M1}) umzuwandeln, welcher dem jeweiligen Sensorstrom (I_{S}) entspricht.

12. Sensoranordnung (1) nach Anspruch 11, **dadurch gekennzeichnet, dass** die Stromverarbeitung (30) eine erste Hilfsspannungserzeugung (35) mit einem Energiespeicher (C_{H}) umfasst, welcher ausgeführt ist, an einem Summenpunkt (SP) eine erste Hilfsspannung (VH1) auszugeben, welche niedriger als die Versorgungsspannungen der Energiequellen (VB1, VB2) ist, wobei der Summenpunkt (SP) zum Laden des Energiespeichers (C_{H}) zwischen der jeweiligen Umschaltvorrichtung (20) und dem jeweiligen Stromsensor (32) mit den Sensorstrompfaden der verbunden Sensorelemente (WSS) verbunden ist.

13. Sensoranordnung (1) nach Anspruch 12, **dadurch gekennzeichnet, dass** der Summenpunkt (SP) jeweils über eine Rückspeiseschutzdiode (D3) und eine Stromquelle (IQ) mit den Sensorstrompfaden der verbundenen Sensorelemente (WSS) verbunden ist.

14. Sensoranordnung (1) nach Anspruch 12 oder 13, **dadurch gekennzeichnet, dass** die Stromverarbeitung (30) eine zweite Hilfsspannungserzeugung (36) umfasst, welche als Gleichspannungswandler (DC/DC) ausgeführt ist, welcher ausgeführt ist, die erste Hilfsspannung (VH1) in eine deutlich niedrigere zweite Hilfsspannung (VH2) zu wandeln.

15. Sensoranordnung (1) nach Anspruch 14, **dadurch gekennzeichnet, dass** die zweite Hilfsspannung (VH1) die Stromaufbereitung (34) versorgt.

16. Sensoranordnung (1) nach einem der Ansprüche 12 bis 15, **dadurch gekennzeichnet, dass** die Stromverarbeitung (30) eine Notspannungserzeugung (37) umfasst, welche ausgeführt ist, ein verbundenes Sensorelement (WSS) bei fehlender Versorgungsspannung mit einer dritten Hilfsspannung (VH3) zu versorgen, welche aus den Sensorstrompfaden der anderen verbundenen Sensorelemente (WSS) erzeugt wird.

17. Sensoranordnung (1) nach Anspruch 16, **dadurch gekennzeichnet, dass** die Notspannungserzeugung (37) einen Gleichspannungswandler (38), welcher ausgeführt ist, die zweite Hilfsspannung (VH2) in die höhere dritte Hilfsspannung (VH3) zu wandeln, eine Schaltvorrichtung (SW) und eine Rückspeiseschutzdiode (D4) umfasst, wobei die Schaltvorrichtung (SW) ausgeführt ist, die dritte Hilfsspannung (VH3) mit dem betroffenen Sensorstrompfad zu verbinden.

18. Sensoranordnung (1) nach einem der Ansprüche 7 bis 17, **dadurch gekennzeichnet, dass** die Stromverarbeitung (30) und die Umschaltvorrichtung (20) in einem Verschaltungsmodul (10) zusammengefasst sind, welches als ASIC-Baustein ausgeführt ist.

19. Sensoranordnung (1) nach einem der Ansprüche 1 bis 18, **dadurch gekennzeichnet, dass** die einzelnen Sensorelemente (WSS) jeweils über eine Zweidrahtleitung (L2) mit dem ersten Steuergerät (ECU1) verbunden sind.

20. Sensoranordnung (1) nach einem der Ansprüche 1 bis 19, **dadurch gekennzeichnet, dass** die mindestens zwei Steuergeräte (ECU1, ECU2) über eine mehradrige Leitung (L1) miteinander verbunden sind, welche für jedes der mit dem ersten Steuergerät (ECU1) verbundenen Sensorelemente (WSS) eine Ader zur Übertragung des jeweiligen Sensorstroms (I_{S}) und eine Ader zur Verbindung der Umschaltvorrichtung (20) mit der zweiten Energiequelle (VB2) umfasst.

## Claims

1. Sensor arrangement (1) having a sensor element (WSS) and at least two control devices (ECU1, ECU2) each having an evaluation and control unit (3A, 3B) and an energy source (VB1, VB2), wherein a first control device (ECU1) is designed so that a first evaluation and control unit (3A) is connected to a first energy source (VB1) and a second control device (ECU2) is designed so that a second evaluation and control unit (3B) is connected to a second energy source (VB2), wherein the first control device (ECU1) comprises a changeover apparatus (20) designed so that a first connection (WSS1) of the sensor element (WSS) is connected to the first energy source (VB1) and/or to the second energy source (VB2), wherein a second connection (WSS2) of the sensor element (WSS) is connected to the second control device (ECU2), wherein a sensor current (I_{S}) flowing through the sensor element (WSS) is modulated during operation with information relating to a captured measurement variable, wherein the first evaluation and control unit (3A) is designed to evaluate the sensor current (I_{S}) captured between the connected energy source (VB1, VB2) and the sensor element (WSS) and the second evaluation and control unit (3B) is designed to evaluate the sensor current (I_{S}) captured between the sensor element (WSS) and earth, and wherein the changeover apparatus (20) is designed to connect the first connection (WSS1) of the sensor element (WSS) to the other energy source (VB2, VB1) when the connected energy source (VB1, VB2) fails.

2. Sensor arrangement (1) according to Claim 1, **characterized in that** a plurality of sensor elements (WSS) are provided and are respectively arranged at a measurement point.

3. Sensor arrangement (1) according to Claim 2, **characterized in that** the measurement points are each assigned to a vehicle wheel, wherein the associated sensor element (WSS) is designed to capture at least a speed and/or rotational speed of the corresponding vehicle wheel.

4. Sensor arrangement (1) according to one of Claims 1 to 3, **characterized in that** the changeover apparatus (20A) comprises, at least for each connected sensor element (WSS), two diodes (D1, D2) with a common node (K) to which a supply voltage for the sensor element (WSS) connected to the common node (K) is applied, wherein a first diode (D1) is designed to connect the first energy source (VB1) in the forward direction to the common node (K), and a second diode (D2) is designed to connect the second energy source (VB2) in the forward direction to the common node (K), with the result that a supply voltage which is fed from the first and/or the second energy source (VB1, VB2) is applied to the common node (K), wherein the higher voltage prevails.

5. Sensor arrangement (1) according to one of Claims 1 to 3, **characterized in that** the changeover apparatus (20B) comprises, at least for each connected sensor element (WSS), two switching elements (21, 22) with a common node (K) to which a supply voltage for the sensor element (WSS) connected to the common node (K) is applied, wherein a first actuation unit (25) is designed to actuate a first switching element (21) which connects the common node (K) to the first energy source (VB1), and a second actuation unit (26) is designed to actuate a second switching element (22) which connects the common node (K) to the second energy source (VB2).

6. Sensor arrangement (1) according to Claim 5, **characterized in that** the first actuation unit (25) is designed to actuate the first switching element (21) and to connect the common node (K) to the first energy source (VB1) if a first voltage detection means (23) detects that the first energy source (VB1) provides a first voltage, wherein the second actuation unit (26) is designed to actuate the second switching element (22) and to connect the common node (K) to the second energy source (VB2) if a second voltage detection means (24) detects that the second energy source (VB2) provides a second voltage and a priority circuit (27) enables the actuation of the second switching element (22), wherein the priority circuit (27) is designed to enable the actuation of the second switching element (22) if the first voltage detection means (23) detects that the first energy source (VB1) does not provide a voltage.

7. Sensor arrangement (1) according to one of Claims 1 to 6, **characterized in that** a current processing means (30) is arranged in the first control device (ECU1) and is designed to capture the respective sensor current (I_{S}) between the connected energy source (VB1, VB2) and the respective sensor element (WSS) and to make it available to the first evaluation and control unit (3A) as respective measurement current (I_{M1}).

8. Sensor arrangement (1) according to Claim 7, **characterized in that** the second evaluation and control unit (3B) is designed to receive and evaluate the respective sensor current (I_{S}) directly as a second measurement current (I_{M2}).

9. Sensor arrangement (1) according to Claim 7 or 8, **characterized in that** the current processing means (30) comprises, at least for each connected sensor element (WSS), a current sensor (32) looped into the current path and designed to branch off a fraction (I_{S}/n) of the respective sensor current (I_{S}) and forward it to the first evaluation and control unit (3A).

10. Sensor arrangement (1) according to Claim 9, **characterized in that** the first evaluation and control unit (3A) has, at least for each connected sensor element (WSS), an input protective circuit (R_{MA}) which is designed to convert the fraction (I_{S}/n) of the respective sensor current (I_{S}) into a measurement signal corresponding to the respective sensor current (I_{S}).

11. Sensor arrangement (1) according to Claim 9, **characterized in that** the current processing means (30) comprises, at least for each connected sensor element (WSS), a current conditioning means (34) which is arranged between the respective current sensor (32) and the first evaluation and control unit (3A) and is designed to convert the fraction (I_{S}/n) of the respective sensor current (I_{S}) into an associated measurement current (I_{M1}) corresponding to the respective sensor current (I_{S}).

12. Sensor arrangement (1) according to Claim 11, **characterized in that** the current processing means (30) comprises a first auxiliary voltage generation means (35) with an energy store (C_{H}) which is designed to output, at a summation point (SP), a first auxiliary voltage (VH1) which is lower than the supply voltages of the energy sources (VB1, VB2), wherein the summation point (SP) is connected to the sensor current paths of the connected sensor elements (WSS) between the respective changeover apparatus (20) and the respective current sensor (32) in order to charge the energy store (C_{H}).

13. Sensor arrangement (1) according to Claim 12, **characterized in that** the summation point (SP) is respectively connected to the sensor current paths of the connected sensor elements (WSS) via a feedback protective diode (D3) and a current source (IQ).

14. Sensor arrangement (1) according to one of Claims 12 or 13, **characterized in that** the current processing means (30) comprises a second auxiliary voltage generation means (36) which is in the form of a DC/DC converter (DC/DC) and is designed to convert the first auxiliary voltage (VH1) into a considerably lower second auxiliary voltage (VH2).

15. Sensor arrangement (1) according to Claim 14, **characterized in that** the second auxiliary voltage (VH1) supplies the current conditioning means (34).

16. Sensor arrangement (1) according to one of Claims 12 to 15, **characterized in that** the current processing means (30) comprises an emergency voltage generation means (37) which, if the supply voltage is missing, is designed to supply a connected sensor element (WSS) with a third auxiliary voltage (VH3) which is generated from the sensor current paths of the other connected sensor elements (WSS).

17. Sensor arrangement (1) according to Claim 16, **characterized in that** the emergency voltage generation means (37) comprises a DC/DC converter (38) which is designed to convert the second auxiliary voltage (VH2) into the higher, third auxiliary voltage (VH3), a switching apparatus (SW) and a feedback protective diode (D4), wherein the switching apparatus (SW) is designed to connect the third auxiliary voltage (VH3) to the affected sensor current path.

18. Sensor arrangement (1) according to one of Claims 7 to 17, **characterized in that** the current processing means (30) and the changeover apparatus (20) are combined in a connection module (10) which is in the form of an ASIC module.

19. Sensor arrangement (1) according to one of Claims 1 to 18, **characterized in that** the individual sensor elements (WSS) are respectively connected to the first control device (ECU1) via a two-wire line (L2).

20. Sensor arrangement (1) according to one of Claims 1 to 19, **characterized in that** the at least two control devices (ECU1, ECU2) are connected to one another via a multicore line (L1) which comprises, for each of the sensor elements (WSS) connected to the first control device (ECU1), one core for transmitting the respective sensor current (I_{S}) and one core for connecting the changeover apparatus (20) to the second energy source (VB2).

## Revendications

1. Agencement de capteur (1), comprenant un élément capteur (WSS) et au moins deux appareils de commande (ECU1, ECU2) qui présentent respectivement une unité d'évaluation et de commande (3A, 3B) et une source d'énergie (VB1, VB2), dans lequel un premier appareil de commande (ECU1) est conçu de telle sorte qu'une première unité d'évaluation et de commande (3A) est reliée à une première source d'énergie (VB1), et un deuxième appareil de commande (ECU2) est conçu de telle sorte qu'une deuxième unité d'évaluation et de commande (3B) est reliée à une deuxième source d'énergie (VB2), le premier appareil de commande (ECU1) comprenant un dispositif de commutation (20) qui est réalisé de telle sorte qu'une première borne (WSS1) de l'élément capteur (WSS) est reliée à la première source d'énergie (VB1) et/ou à la deuxième source d'énergie (VB2), une deuxième borne (WSS2) de l'élément capteur (WSS) étant reliée au deuxième appareil de commande (ECU2), dans lequel un courant de capteur (I_{S}) passant par l'élément capteur (WSS) est modulé en cours de fonctionnement avec des informations sur une grandeur de mesure détectée, dans lequel la première unité d'évaluation et de commande (3A) est réalisée pour évaluer le courant de capteur (I_{S}) détecté entre la source d'énergie (VB1, VB2) reliée et l'élément capteur (WSS), et la deuxième unité d'évaluation et de commande (3B) est réalisée pour évaluer le courant de capteur (I_{S}) détecté entre l'élément capteur (WSS) et la masse, et dans lequel, en cas de défaillance de la source d'énergie (VB1, VB2) reliée, le dispositif de commutation (20) est réalisé pour relier la première borne (WSS1) de l'élément capteur (WSS) à l'autre source d'énergie (VB2, VB1).

2. Agencement de capteur (1) selon la revendication 1, **caractérisé en ce que** plusieurs éléments capteurs (WSS) sont prévus qui sont respectivement disposés en un point de mesure.

3. Agencement de capteur (1) selon la revendication 2, **caractérisé en ce que** les points de mesure sont respectivement associés à une roue de véhicule, l'élément capteur (WSS) associé étant réalisé pour détecter au moins un nombre de tours et/ou une vitesse de rotation de la roue de véhicule correspondante.

4. Agencement de capteur (1) selon l'une quelconque des revendications 1 à 3, **caractérisé en ce que** le dispositif de commutation (20A) comprend au moins pour chaque élément capteur (WSS) relié deux diodes (D1, D2) ayant un nœud commun (K) auquel est appliqué une tension d'alimentation pour l'élément capteur (WSS) relié au nœud commun (K), dans lequel une première diode (D1) est réalisée pour relier la première source d'énergie (VB1) dans le sens passant au nœud commun (K), et une deuxième diode (D2) est réalisée pour relier la deuxième source d'énergie (VB2) dans le sens passant au nœud commun (K) de sorte qu'une tension d'alimentation est appliquée au nœud commun (K) qui est alimentée par la première et/ou la deuxième source d'énergie (VB1, VB2), la tension supérieure s'imposant.

5. Agencement de capteur (1) selon l'une quelconque des revendications 1 à 3, **caractérisé en ce que** le dispositif de commutation (20B) comprend au moins pour chaque élément capteur (WSS) relié deux éléments de commutation (21, 22) ayant un nœud commun (K) auquel est appliquée une tension d'alimentation pour l'élément capteur (WSS) relié au nœud commun (K), dans lequel une première unité d'excitation (25) étant réalisée pour exciter un premier élément de commutation (21) qui relie le nœud commun (K) à la première source d'énergie (VB1), et une deuxième unité d'excitation (26) est réalisée pour exciter un deuxième élément de commutation (22) qui relie le nœud commun (K) à la deuxième source d'énergie (VB2).

6. Agencement de capteur (1) selon la revendication 5, **caractérisé en ce que** la première unité d'excitation (25) est réalisée pour exciter le premier élément de commutation (21) et pour relier le nœud commun (K) à la première source d'énergie (VB1) lorsqu'un premier dispositif de détection de tension (23) détecte que la première source d'énergie (VB1) fournit une première tension, dans lequel la deuxième unité d'excitation (26) est réalisée pour exciter le deuxième élément de commutation (22) et pour relier le nœud commun (K) à la deuxième source d'énergie (VB2) lorsqu'un deuxième dispositif de tension (24) détecte que la deuxième source d'énergie (VB2) fournit une deuxième tension et un circuit de priorité (27) autorise l'excitation du deuxième élément de commutation (22), dans lequel le circuit de priorité (27) est réalisé pour autoriser l'excitation du deuxième élément de commutation (22) lorsque le premier dispositif de détection de tension (23) détecte que la première source d'énergie (VB1) ne fournit aucune tension.

7. Agencement de capteur (1) selon l'une quelconque des revendications 1 à 6, **caractérisé en ce que** dans le premier appareil de commande (ECU1) est disposé un dispositif de traitement de courant (30) qui est réalisé pour détecter le courant de capteur (I_{S}) respectif entre la source d'énergie (VB1, VB2) reliée et l'élément capteur (WSS) respectif et pour le fournir à la première unité d'évaluation et de commande (3A) en tant que courant de mesure (I_{M1}) respectif.

8. Agencement de capteur (1) selon la revendication 7, **caractérisé en ce que** la deuxième unité d'évaluation et de commande (3B) est réalisée pour recevoir et évaluer le courant de capteur (I_{S}) respectif directement en tant que deuxième courant de mesure (I_{M2}).

9. Agencement de capteur (1) selon la revendication 7 ou 8, **caractérisé en ce que** le dispositif de traitement de courant (30) comprend au moins pour chaque élément capteur (WSS) relié un capteur de courant (32) inséré sur le trajet de courant qui est réalisé pour dériver une fraction (I_{S}/n) du courant de capteur (I_{S}) respectif et pour le retransmettre à la première unité d'évaluation et de commande (3A).

10. Agencement de capteur (1) selon la revendication 9, **caractérisé en ce que** la première unité d'évaluation et de commande (3A) présente au moins pour chaque élément capteur (WSS) relié un câblage d'entrée (R_{MA}) qui est réalisé pour convertir la fraction (I_{S}/n) du courant de capteur (I_{S}) respectif en un signal de mesure qui correspond au courant de capteur (I_{S}) respectif.

11. Agencement de capteur (1) selon la revendication 9, **caractérisé en ce que** le dispositif de traitement de courant (30) comprend au moins pour chaque élément capteur (WSS) relié un dispositif de conditionnement de courant (34) qui est disposé entre le capteur de courant (32) respectif et la première unité d'évaluation et de commande (3A) et est réalisé pour convertir la fraction (I_{S}/n) du courant de capteur (I_{S}) respectif en un courant de mesure (I_{M1}) associé qui correspond au courant de capteur (I_{S}) respectif.

12. Agencement de capteur (1) selon la revendication 11, **caractérisé en ce que** le traitement de courant (30) comprend un premier dispositif de génération de tension auxiliaire (35) pourvu d'un accumulateur d'énergie (C_{H}) qui est réalisé pour délivrer au niveau d'un point de sommation (SP) une première tension auxiliaire (VH1) qui est inférieure aux tensions d'alimentation des sources d'énergie (VB1, VB2), le point de sommation (SP) étant relié aux trajets de courant de capteur des éléments capteurs (WSS) reliés pour charger l'accumulateur d'énergie (C_{H}) entre le dispositif de commutation (20) respectif et le capteur de courant (32) respectif.

13. Agencement de capteur (1) selon la revendication 12, **caractérisé en ce que** le point de sommation (SP) est relié respectivement par une diode de protection antiretour (D3) et une source d'énergie (IQ) aux trajets de courant de capteur des éléments capteurs (WSS) reliés.

14. Agencement de capteur (1) selon la revendication 12 ou 13, **caractérisé en ce que** le dispositif de traitement de courant (30) comprend un deuxième dispositif de génération de tension auxiliaire (36) qui est réalisé sous la forme d'un convertisseur continu-continu (DC/DC) qui est réalisé pour convertir la première tension auxiliaire (VH1) en une deuxième tension auxiliaire (VH2) nettement inférieure.

15. Agencement de capteur (1) selon la revendication 14, **caractérisé en ce que** la deuxième tension auxiliaire (VH1) alimente le dispositif de conditionnement de courant (34).

16. Agencement de capteur (1) selon l'une quelconque des revendications 12 à 15, **caractérisé en ce que** le dispositif de traitement de courant (30) comprend un dispositif de génération de tension de secours (37) qui est réalisé, en cas d'absence de tension d'alimentation, pour alimenter un élément capteur (WSS) relié en une troisième tension auxiliaire (VH3) qui est générée à partir des trajets de courant de capteur des autres éléments capteurs (WSS) reliés.

17. Agencement de capteur (1) selon la revendication 16, **caractérisé en ce que** le dispositif de génération de tension de secours (37) comprend un convertisseur continu-continu (38) qui est réalisé pour convertir la deuxième tension auxiliaire (VH2) en la troisième tension auxiliaire supérieure (VH3), un dispositif de commutation (SW) et une diode de protection antiretour (D4), le dispositif de commutation (SW) étant réalisé pour relier la troisième tension auxiliaire (VH3) au trajet de courant de capteur concerné.

18. Agencement de capteur (1) selon l'une quelconque des revendications 7 à 17, **caractérisé en ce que** le dispositif de traitement de courant (30) et le dispositif de commutation (20) sont regroupés dans un module de câblage (10) qui est réalisé sous la forme d'un composant ASIC.

19. Agencement de capteur (1) selon l'une quelconque des revendications 1 à 18, **caractérisé en ce que** les éléments capteurs (WSS) individuels sont respectivement reliés au premier appareil de commande (ECU1) par une ligne à deux fils (L2).

20. Agencement de capteur (1) selon l'une quelconque des revendications 1 à 19, **caractérisé en ce que** les au moins deux appareils de commande (ECU1, ECU2) sont reliés les uns aux autres par une ligne à plusieurs fils (L1) qui comprend pour chacun des éléments capteurs (WSS) reliés au premier appareil de commande (ECU1) un fil pour transmettre le courant de capteur (I_{S}) respectif et un fil pour relier le dispositif de commutation (20) à la deuxième source d'énergie (VB2).
